Europäisches Patentamt

(19) European Patent Office

Office européen des brevets

(11) Publication number: **0 191 623**
A2

## (12) EUROPEAN PATENT APPLICATION

(21) Application number: 86300904.9

(22) Date of filing: 11.02.86

(51) Int. Cl.⁴: **B 29 C 45/16,** B 29 C 45/57, B 29 C 37/00

(30) Priority: 13.02.85 GB 8503695

(43) Date of publication of application: 20.08.86 Bulletin 86/34

(84) Designated Contracting States: **AT BE CH DE FR GB IT LI LU NL SE**

(71) Applicant: **BP Chemicals Limited, Belgrave House 76 Buckingham Palace Road, London, SW1W 0SU (GB)**

(72) Inventor: **Allan, Peter Stewart, Dr., Brunel University Uxbridge, Middlesex UB8 3PH (GB)**
Inventor: **Bevis, Michael John, Prof., Brunel University Uxbridge, Middlesex UB8 3PH (GB)**

(74) Representative: **Fawcett, Richard Fennelly et al, BP INTERNATIONAL LIMITED Patents Division Chertsey Road, Sunbury-on-Thames Middlesex, TW16 7LN (GB)**

(54) Process for producing sandwich mouldings.

(57) A process for producing sandwich moulding comprising sequentially introducing into a mould a first material capable of forming the surface layer or «skin» of the sandwich moulding followed by a second material capable of forming the «core» of the sandwich moulding in which process, after filling the mould, an oscillating packing pressure is applied to the material in the mould at least during the initial cooling of the melt and concurrently therewith additional thermoplastic material is introduced into the mould.

EP 0 191 623 A2

PROCESS FOR PRODUCING SANDWICH MOULDINGS

The present invention relates to a process for producing sandwich mouldings.

Processes for the production of moulded articles having an outer surface layer or "skin" of a first polymer composition and an inner "core" of a second polymer composition are known. The moulded articles produced by such processes are generally known as "sandwich mouldings". The known processes for producing sandwich mouldings generally involve simultaneous or, more preferably, sequential introduction of two polymer compositions into a mould. The core material is often foamed. British Patent Specification GB 1156217 describes a process for producing sandwich mouldings in which the core is foamed. An experimental study of sandwich moulding using sequential injection of polymer melts is described in a paper by Young S.S. et al in Polymer Engineering and Science, August 1980, Volume 20, No. 12, pages 798 to 804.

A problem associated with the production of sandwich mouldings from melts comprising thermoplastic polymers is that the mouldings tend to undergo internal shrinking during cooling. Shrinkage in such mouldings can lead to the formation of internal voids, surface defects (e.g. "sink marks") and distortion of the moulded articles. In addition, there may be problems at the interface between the skin and the core of the sandwich moulding e.g. the core may tend to shrink away from the skin.

It is an object of the present invention to provide a process for producing sandwich mouldings in which the problems associated

1

with shrinkage are avoided or at least mitigated.

According to the present invention a process for producing sandwich mouldings comprising sequentially introducing into a mould a first material capable of forming the surface layer of the sandwich moulding followed by a second material comprising a thermoplastic melt which second material is capable of forming the core of the sandwich moulding the process being characterised in that after filling the mould an oscillating packing pressure is applied to the material in the mould at least during the initial cooling of the thermoplastic melt and concurrently therewith additional thermoplastic material is introduced into the mould.

The term "oscillating packing pressure" as used in this specification means pressure surges periodically succeeding each other.

The frequency and amplitude of the pressure surges will depend, inter alia, on the materials used to form the sandwich moulding, the temperature at which the materials are introduced into the mould, the temperature of the mould and the geometry of the inlet section of the mould and of the mould cavity. The pressure surges acting on the material in the mould cause the melt to flow back and forth at the mould inlet section. Some of the pressure energy is converted to heat particularly at restrictions in the inlet section of the mould. Cooling of the melt at least in the region of such a restriction is therefore delayed which postpones the solidification of the melt at least in the inlet section of the mould, thereby allowing additional thermoplastic material to be introduced into the mould to compensate for the shrinkage of the bulk of the moulding material as it cools. The frequency and amplitude of the pressure surges may be selected to keep the inlet section open as long as necessary.

The oscillating packing pressure as measured in the mould cavity depends inter alia on the volume of the mould cavity, the material being moulded and the pressure exerted by the packing means. For example, a 40 mm thick moulding of medium density polyethylene could be moulded according to the present invention using a mean pressure of about 35 MPa and cycling the pressure over a pressure difference, i.e. the difference between the maximum and minimum pressure within the mould cavity of about 10 MPa. Typically, the pressure difference used in the process according to the present invention is from 5 to 150 MPa, preferably 10 to 30 MPa. The frequency of oscillation may be, for example, from 0.2 to 10 Hz and is preferably from 0.4 to 2.0 Hz.

For a given set of moulding conditions, the packing time, i.e. the period of time between filling the mould and the closure of the inlet section of the mould, for the process according to the present invention, is determined primarily by the thickness of the mould cavity. For the same set of moulding conditions, the packing time for the same moulding, using a conventional static packing pressure is determined primarily by the dimensions of restrictions in the inlet section of the mould such as, for example, the sprue, runner and/or gating of the mould. Typically, the packing time is increased by three to six times as compared with the packing time under a conventional static packing pressure. However, the packing time may be increased by much longer if desired.

The use of pressure surges for the production of thick-walled, large-capacity moulds from a single thermoplastic melt is known and is described, for example, in German patent application No. 2614213.

The oscillating packing pressure can be provided by the screw ram of a conventional reciprocating screw injection moulding unit. The energy can also be provided by modifying the nozzle or injection system of the mould to provide, for example, a piston acting at any point of the flow path from the tip of the screw to the inlet of the mould cavity. Suitable methods of producing the oscillating packing pressure are described in DE-A-2614213. A preferred technique for providing the oscillating packing pressure comprises a piston in the nozzle which is operated by a hydraulically driven push rod.

The first material which forms the skin and the second material which forms the core of the sandwich moulding may be fed to the mould using conventional injection moulding and/or flow moulding machines. It would, for example, be possible to use a conventional injection moulding or flow moulding machine in which a predetermined amount of the first material is introduced into the front of the barrel of the moulding machine and the second material is introduced into the barrel behind the first material. However, this method is not preferred because undesirable mixing of the two melts will occur. A preferred method of supplying the materials to the mould is to use a separate injection moulding or flow moulding machine for each material which machines feed the materials through a common nozzle. The common nozzle should preferably be designed to minimise the cross-contamination of the materials. Alternatively, separate injection moulding or flow moulding machines may be used each of which injects material into the mould through a separate nozzle.

According to the present invention, the first material which forms the skin of the sandwich moulding is introduced into the mould first followed by the second material which forms the core. Preferably, a second amount of the skin material is introduced into the mould after the core material. This technique completes the skin. It also has the advantage that where a single nozzle is being used for both materials, the second injection of skin material removes residual core material from the nozzle leaving it clean for the next moulding operation. The additional material which is introduced while the core material is being subjected to oscillating packing pressure may comprise any suitable thermoplastic. Preferably, the additional material and the first material, i.e. the skin are the same thermoplastic material.

The first material which is capable of forming the skin of the sandwich moulding preferably comprises a thermoplastic material. Thermoplastic materials which can be used as the first material and/or the second material, which is capable of forming the core of the sandwich moulding, include for example, polymers of alpha-olefins such as polyethylene, polypropylene, polybutene, 4-methyl-pentene-1 and copolymers of such alpha-olefins; homo-polymers and copolymers of vinyl chloride; homo-polymers and copolymers of styrene e.g. polystyrene, acrylonitrile - butadiene-styrene copolymers; polycarbonates; copolymers of methyl methacrylate and linear polyesters. The first material and/or second material may contain conventional fillers, reinforcements, pigments, plasticisers or additives. Although the nature of a sandwich moulding requires the skin and core to be of different materials, they may be based on the same polymers. For example, the skin material may comprise polypropylene and pigments, fillers and other additives which enhance the surface finish of the skin while the core material may comprise the same polypropylene which is reinforced e.g. with glass fibres but which contains no other additives.

The choice of materials for the skin and core of the sandwich moulding will depend on the use to which the moulding is to be put. For example, if the moulding requires strength, the skin may be formed from a suitably stiff material e.g. polypropylene and the core may be a suitably reinforced material. If the desired feature is a low cost moulding with a high quality surface finish, the core may be any suitable low cost material. The invention is particularly suitable for producing sandwich mouldings comprising a first material capable of forming a skin with a good surface finish and a second material which is a reinforced thermoplastic i.e. a thermoplastic reinforced with glass fibres or other suitable fillers.

The process according to the present invention can also be used to produce mouldings comprising a non-weldable core which mouldings are nevertheless weldable by virtue of a weldable skin. For example, the process can be used to produce pipe fittings comprising a glass-reinforced plastic core and a polyethylene skin. Glass-reinforced plastic is not readily weldable but the polyethylene skin would enable such a fitting to be welded.

Although the process according to the present invention has been described particularly for the production of a sandwich moulding comprising a single core material surrounded by a single skin material, it can be used to produce multi-layered mouldings comprising three or more layers. The present invention includes such multi-layered mouldings produced by the process.

A further embodiment of the invention comprises a process in which the second material is used to form a core only in one or more parts of the moulding. This embodiment may be used to produce mouldings in which one or more parts of the moulding has a sandwich construction while the rest of the moulding comprises only the first material i.e. the "skin". Thus it is possible to provide localised modification of a moulding such as, for example, the reinforcement of a particular part or parts of the moulding. The oscillating packing pressure and introduction of additional material are then used to avoid or at least mitigate the effects of shrinkage and to enhance the surface finish of the moulding.

The invention is illustrated by reference to the following Example.

Example

Two conventional reciprocating screw injection moulding units were used to sequentially inject material through a nozzle into a mould cavity to form a sandwich mould. The mould cavity measured 25 x 25 x 175 mm and was centrally gated on one of the 25 x 175 mm faces. One of the injection moulding units was used to supply polypropylene having a Melt Flow Index (condition 4) of 30. This propylene was to form the skin of the sandwich moulding. The other injection moulding unit was used to supply the core material of the sandwich moulding. The core material comprised polypropylene with 40% by weight of glass fibres. The polypropylene was the same as that used for the skin.

The skin and core materials were sequentially injected into the mould through a nozzle which kept the two streams separate up to the tip of the nozzle in order to reduce cross-contamination. 43g of the skin material was injected first at a rate 6 g/s. This was immediately followed by 22.5g of the core material at a rate of 7.5 g/s. As the core material was being injected, the injection unit containing the polypropylene skin composition was screwed back to form a second 43 g shot which was injected at a rate of 6 g/s immediately after the core material to fill the mould cavity. As it cooled, the mould was packed using oscillating pressure with additional polypropylene skin material being fed to the mould. The oscillating packing pressure was achieved by controlling a hydraulically driven push rod acting on a piston within the nozzle. The pressure within the mould cavity was measured by a pressure transducer positioned opposite the inlet section. The pressure cycle was initially between 4 and 28 MPa at a frequency of 0.45 Hz but this changed as the mould cooled and the melt solidified. The initial rate of injection of the additional skin material was 11 g/s. The total packing time was 780s and 10g of additional skin material were introduced into the mould in this time.

After a further 60s of cooling, the moulding was released from the mould. The moulding was well formed and had no visible sink marks.

The mould was cut in two so that the skin and core could be examined. The moulding was free of voids. The skin was continuous and well formed.

For comparison, the example was repeated except that instead of the oscillating packing pressure, a static pressure of 15 MPa was used. The moulding contained large voids and was misshapen.

Claims:

1 A process for producing sandwich mouldings comprising sequentially introducing into a mould a first material capable of forming the surface layer of the sandwich moulding followed by a second material comprising a thermoplastic melt which second material is capable of forming the core of the sandwich moulding characterised in that after filling the mould, an oscillating packing pressure is applied to the material in the mould at least during the initial cooling of the thermoplastic melt and concurrently therewith additional thermoplastic material is introduced into the mould.

2 A process as claimed in claim 1 in which the oscillating packing pressure as measured at the inlet section of the mould comprises cycling the pressure over a pressure difference of from 5 to 150 MPa.

3 A process as claimed in claim 2 in which the pressure difference is from 10 to 30 MPa.

4 A process as claimed in any one of claims 1 to 3 in which the frequency of oscillation of the packing pressure is from 0.2 to 10Hz.

5 A process as claimed in claim 4 in which the frequency of oscillation of the packing pressure is from 0.4 to 2Hz.

6 A process as claimed in any one of the preceding claims in which the first material and second material are supplied by separate injection moulding machines and injected into the mould through a common nozzle.

7 A process as claimed in any one of the preceding claims in which the first material is a thermoplastic.

8. A process as claimed in claim 1 in which the second material is introduced into one or more parts of the moulding such that the said one or more parts have a sandwich moulding construction while the rest of the moulding comprises only the first material.

9. A process as claimed in claim 1 in which the second material is a reinforced thermoplastic.

10. A sandwich moulding comprising two or more layers obtainable by the process claimed in any of the preceeding claims.